# EUROPEAN PATENT SPECIFICATION

(11) **EP 3 685 530 B1**
(45) Date of publication and mention of the grant of the patent: **15.09.2021**
(21) Application number: 18765915.6
(22) Date of filing: 14.09.2018
(51) Int. Cl.: H04B 10/70

(54) **MODE COUPLING RECEIVER FOR QUANTUM COMMUNICATIONS AND QUANTUM COMMUNICATION SYSTEM COMPRISING SAID RECEIVER**
OPTISCHER EMPFÄNGER MIT MODENKOPPLUNG FÜR QUANTENKOMMUNIKATION UND QUANTENKOMMUNIKATIONSSYSTEM UMFASSEND DIESEN EMPFÄNGER
RÉCEPTEUR OPTIQUE À COUPLAGE DE MODES POUR COMMUNICATION QUANTIQUES ET SYSTÈME DE COMMUNICATION QUANTIQUE COMPRENANT LEDIT RÉCEPTEUR

(30) Priority: 19.09.2017 EP 17191971
(43) Date of publication of application: 29.07.2020
(73) Proprietor: British Telecommunications Public Limited Company, London EC1A 7AJ (GB)
(72) Inventor: LORD, Andrew, London EC4V 5BT (GB)
(74) Representative: British Telecommunications public limited company Intellectual Property Department
(86) International application number: PCT/EP2018/074887
(87) International publication number: WO 2019/057628

(56) References cited:
- WO-A1-2010/048901
- WO-A2-2011/039503
- GB-A- 2 534 917
- NESSET DEREK ET AL: "GPON SFP transceiver with PIC based mode-coupled receiver", 2012 38TH EUROPEAN CONFERENCE AND EXHIBITION ON OPTICAL COMMUNICATIONS, OSA, 16 September 2012 (2012-09-16), pages 1-3, XP032543915, DOI: 10.1364/ECEOC.2012.TU.3.B.4
- NING CHENG ET AL: "Large splitting and long reach passive optical networks with mode coupling receivers", 36TH EUROPEAN CONFERENCE AND EXHIBITION ON OPTICAL COMMUNICATION : (ECOC 2010) ; TORINO, ITALY, 19 - 23 SEPTEMBER 2010, IEEE, PISCATAWAY, NJ, USA, 19 September 2010 (2010-09-19), pages 1-3, XP031789918, ISBN: 978-1-4244-8536-9
- CIURANA ALEX ET AL: "Entanglement Distribution in Optical Networks", IEEE JOURNAL OF SELECTED TOPICS IN QUANTUM ELECTRONICS, IEEE SERVICE CENTER, PISCATAWAY, NJ, US, vol. 21, no. 3, 1 May 2015 (2015-05-01), pages 1-12, XP011565165, ISSN: 1077-260X, DOI: 10.1109/JSTQE.2014.2367241 [retrieved on 2014-11-27]
- ALSHOWKAN MUNEER ET AL: "Quantum Entanglement Distribution for Secret Key Establishment in Metropolitan Optical Networks", 2016 IEEE INTERNATIONAL CONFERENCE ON NETWORKING, ARCHITECTURE AND STORAGE (NAS), IEEE, 8 August 2016 (2016-08-08), pages 1-8, XP032950629, DOI: 10.1109/NAS.2016.7549416

## Description

### Field of the Invention

The present invention relates to optical communications in general and, in particular, to the detection of single-photon signals.

### Background to the Invention

Quantum key distribution (QKD) is an application of single-photon optical communications for the sharing of secret keys between a quantum key (QK) source and a QK receiver (usually the secret key is shared between just one QK source and one QK receiver). In QKD, key information is shared using a single-photon signal that is an optical signal comprising a stream of single photons, in which each photon is detectable separately from every other photon in the stream. Once these single-photon signals are received by the receiver and measured, additional (unencrypted) messages are exchanged between QK source and QK receiver to decide which of the measured photons can be used in forming the secret key. QKD transmitters commonly produce a flow comprised of many coincident photons that is then filtered to reduce the flow down to a single photon at any one time.

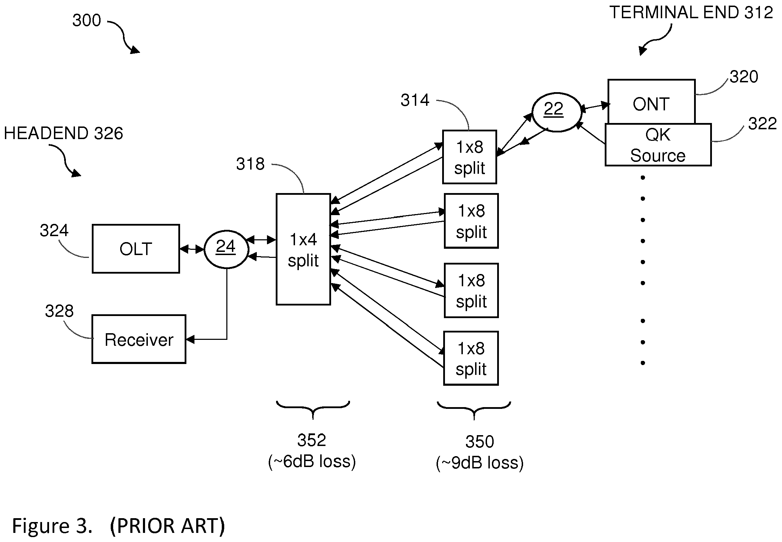

Single-photon signal receivers, such as quantum key receivers, are complex and expensive. To reduce costs, the number of single-photon signal receivers required may be reduced by use of passive optical splitters (also known as a passive optical couplers). Conventional splitters are passive optical components and may be operated bidirectionally (for example, as shown at 318 in Figure 3) so that, what acts as a 1x4 splitter in one direction will act as a 1x4 coupler if the direction of the light is reversed. It will be understood that what may be thought of as an input when a splitter is operated in one direction may be more appropriately thought of as an output when operating in the opposite direction. For simplicity, we use the term "output" to denote a fibre leaving a splitter or combiner, irrespective of whether an optical signal is flowing into or out of the splitter through that fibre.

Use of a passive optical splitter allows multiple single-photon QK sources to be connected to a single single-photon signal receiver via one or more stages of passive optical splitters. A splitter may be thought of as introducing a split in the optical path so that a signal on an input fibre is shared between multiple output fibres. A disadvantage with this approach is that each splitter incurs a loss and these losses increase the more the optical path is split between different fibres.

A limited power budget is available for operation between a single-photon QK source and a single-photon signal receiver. The power budget for an optical path is calculated from the launch power of the single-photon QK source, from which have to be subtracted the sensitivity of the single-photon signal receiver and the losses introduced by any splitters in the path. The length of optical fibre over which optical communication can reliably be achieved depends on the size of the resulting power budget, however, losses introduced by optical splitters into the optical path reduce the range.

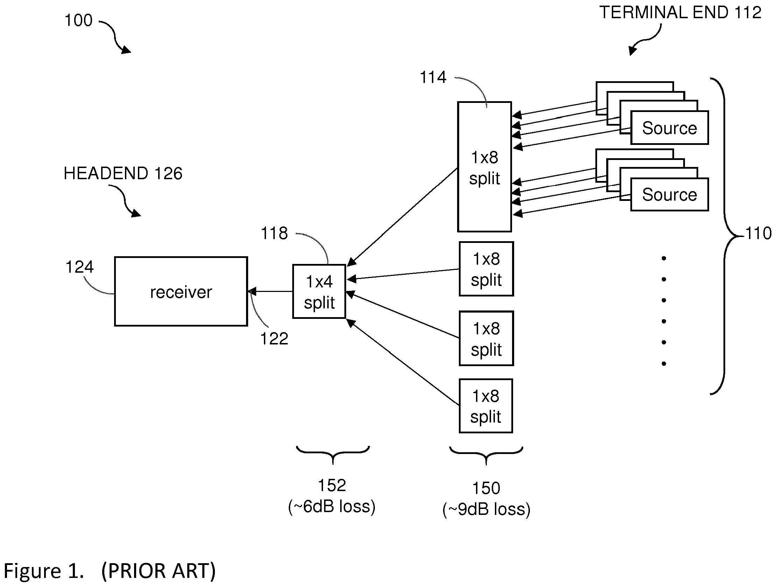

Figure 1 shows a conventional QKD PON 100. PON technology relies on passive optical splitters, as no power is required for operation and, typically, fused-fibre optical splitters (also known as fused-fibre optic couplers) are commonly used. In the case of fused-fibre optical splitters, light is transferred between two fibres when they are brought together to meet and then diverge again. A standard design of optical splitter exchanges 50% of the light from each fibre to the other fibre. A standard 1x2 design of optical splitter has a single-output side with a single output fibre and a two-output side with two output fibres (that is, one of the fibres terminates after meeting the other fibre and one leg of the fibre is not connected to an output). Splitters with greater fan-outs can then be constructed from multiple 1x2 splitters. For example, a 1x4 splitter can be constructed by arranging three 1x2 splitters so that the single-output sides of the second and third optical splitter are connected to respective ones of the two-output side of the first optical splitter.

As noted, above, these splitters are bidirectional, so that, what acts as a 1x2 splitter in one direction will act as a 1x2 coupler if the direction of the light is reversed. Taking the example of a splitter with 50% transfer, while 50% of the input on the single-output will find its way to each of the two-outputs, 50% of the input on each of the two-outputs will find its way to the single-output (the other 50% goes to the unconnected fibre leg). In this way optical splitters introduce significant attenuation into the optical path in both directions (i.e. when splitting a single input signal between multiple outputs and when coupling multiple input signals onto a single output).

Returning to Figure 1, there are 32 QK sources 110 located at the terminal end 112 of QKD PON 100, with the sources arranged as 4 groups of 8 sources (only one group of 8 shown). Each group of 8 is connected to the 8 fibres at one side of an 8-input, single output (1x8) splitter 114 in a first stage 150, introducing about 9dB loss. The single output from the other side of each 1x8 splitter 114 in the first stage 150 then feeds into one of the four fibres at one side of a 4-input, single output (1x4) splitter 118 in a second stage 152, introducing about 6dB loss - making a total of 15dB loss for the combination of the first and second stages. Finally the single fibre output from the other side of the 1x4 splitter 118 in the second stage 152 feeds into an input 122 of an optical receiver 124 located at the headend 126 of QKD PON 100. Each of the splitters 114, 118 introduces a loss into the optical signal passing through it. The amount of loss depends on the degree of splitting, so that the 1x8 splitter will introduce twice the loss of the 1x4 splitter. The splitter-introduced losses accumulate over a path from QK source 110 to receiver 124 so that the power budget available to transmit over the path can be significantly reduced.

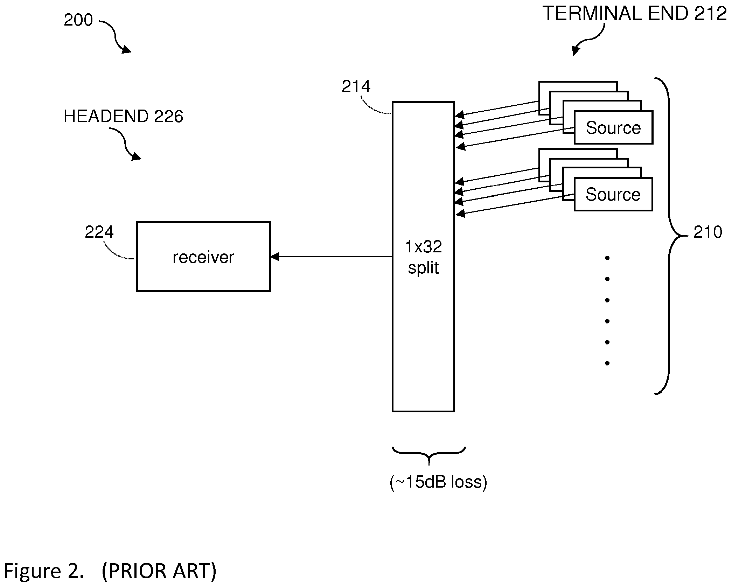

Figure 2 shows an alternative conventional PON arrangement 200 for connecting 32 QK sources 210 located at the terminal end 212 of QKD PON 200 to a single receiver 224 located at the headend 226 of QKD PON 200. Most elements of Figure 2 have a direct equivalent in Figure 1 and will not be described further here. Instead of two stages of splitter, in Figure 2 each of the 32 QK sources is connected to one of 32 fibres at one side of a 1x32 splitter 214, introducing about 15dB loss. It will be noted that the total loss introduced by the two splitter stages in Figure 1 is the same as the loss introduced by the single splitter stage in Figure 2.

Figure 3 shows a conventional QKD PON 300 similar to the arrangement of Figure 1 but now with data signals (bidirectional arrows) transmitted over common paths together with the QKD signals (unidirectional arrows). Each single path from filter 22 to switch 314, e.g. an optical fibre, is represented by the unidirectional arrow to denote the QKD signal and a bidirectional arrow to denote the data signal. Figure 3 shows a data source (ONT) 320 in addition to a QK source 322 located at terminal end 312 of QKD PON 300. Figure 3 also shows a data receiver (OLT) 324 in addition to a QK receiver 328 located at headend 326 of QKD PON 300. Most elements of Figure 3 have a direct equivalent in Figure 1 and will not be described further here. Figure 3 also shows optical filters 22 and 24. Each optical filter 22 has two inputs and one output and is used to combine onto an optical path to one of the splitters 314, the data signal from one of 32 ONTs 320 (only one shown) and the QKD signal from a corresponding one of 32 QK sources 322 (only one shown). That is, each filter 22 acts to combine signals in the part of the optical spectrum used to carry the QKD signal with signals in the part of the optical spectrum used to carry data. In total, 32 optical filters 22 are provided, one optical filter for each pair of ONT 320 and QK source 322 and each combining signals onto a different optical path to one of the splitters 314.

Optical filter 24 has two inputs and two outputs and is used to separate the QKD signals originating at the thirty-two QK sources 322 and received via the splitters 314, 318 from the data signals originating at the thirty-two ONTs 320 and also received via the splitters 314, 318. That is, filter 24 acts to pass to a first output connecting to the QK receiver 328, signals in the part of the optical spectrum used to carry the QKD signal while blocking signals in the part of the optical spectrum used to carry data from passing to the QK receiver. Filter 24 also acts to pass to a second filter output connecting to the OLT 324, signals in the part of the optical spectrum used to carry data, while blocking signals in the part of the optical spectrum used to carry the QKD signal from passing to the OLT.

The following documents disclose some examples of mode coupling optical receivers in the context of passive optical networks:

NESSET DEREK ET AL: "GPON SFP transceiver with PIC based mode-coupled receiver", ECOC 2012

NING CHENG ET AL: "Large splitting and long reach passive optical networks with mode coupling receivers", ECOC 2010

International patent application WO 2010/048901 A1

### Summary of the Invention

According to a first aspect of the invention, there is provided an optical receiver comprising a mode-coupling receiver; in which the mode-coupling receiver comprises a plurality of inputs; in which the mode-coupling receiver is configured to detect receipt of a single-photon signal comprising a stream of single photons on each of the plurality of inputs.

According to a second aspect of the invention, there is provided a method of detecting a plurality of single-photon signals, in which the method comprises: operating a single-photon signal receiver comprising a multiple-input, mode-coupling receiver; in which the multiple-input, mode-coupling receiver is configured to detect receipt of a single-photon signal comprising a stream of single photons on each of the plurality of inputs..

In this way, single-photon signal (e.g. QKD) access systems may be provided in which a plurality of single-photon signal optical transmitters (or single-photon signal sources) connect to the same single-photon signal receiver. By increasing the number of single-photon signals that are connected directly into the same single-photon signal receiver in the access systems, it is possible to create access systems in which losses are reduced, when compared to conventional designs. As a result, significant performance improvements and cost savings are possible.

According to an embodiment, the single-photon signals comprise photons encoded in different quantum states. According to an embodiment, each photon represents quantum key information.

According to an embodiment, there is provided a communications system, in which the communications system comprises the multiple-input, mode-coupling receiver; in which the communications system also comprises an access network connecting a plurality of single-photon signal sources with the optical receiver, in which each of the plurality of inputs of the mode-coupling receiver is connected via the access network for receipt of a single-photon signal from a different one of the plurality of single-photon signal sources.

According to an embodiment the communications system also comprises an optical switch configured to select, for connection to a switch output, a switch input selected from a plurality of switch inputs; in which each of the plurality of switch inputs is connected to different one of the plurality of single-photon signal sources; in which the switch output is connected for sending to one of the plurality of inputs of the mode-coupling receiver, a single-photon signal from the one of the plurality of single-photon signal sources connected to the selected switch input.

In this way, many more single-photon signal sources may be efficiently connected to the same single-photon signal receiver.

According to an embodiment the optical switch comprises a plurality of outputs, in which the switch is configured to select, for connection to each of the plurality of switch outputs, a different one of the plurality of switch inputs; in which each of the plurality of switch outputs is connected to a different one of the plurality of inputs of the mode-coupling receiver.

According to an embodiment the quantity of switch outputs equals the quantity of mode-coupling receiver inputs.

### Brief Description of the Figures

In order that the present invention may be better understood, embodiments thereof will now be described, by way of example only, with reference to the accompanying drawings in which:
Figures 1, 2 and 3 show schematics of single-photon signal PONs not embodying the invention;
Figures 4, 5 and 6 show schematics of single-photon signal PONs embodying the invention.

### Detailed Description of Embodiments

According to embodiments, QKD keys are sent on single-photon signals to a receiver from multiple QK source nodes. Each of the QK source nodes is directly coupled to the same photodetector of a single receiver node. According to an embodiment, at least some of the QK source nodes are coupled through an optical switch to the same photodetector of a single receiver node. In this way, a single receiver can agree QKD secret keys with multiple QK sources at improved range and reliability by reducing the number of splits in the QKD path and in this way reducing the losses introduced into the QKD path. Embodiments result in reduced costs by reducing the number of receivers required and by reducing the need for associated cryogenic cooling.

According to an embodiment, a control system ensures the QK sources transmit their photons so that they arrive at the receiver in an interleaved fashion.

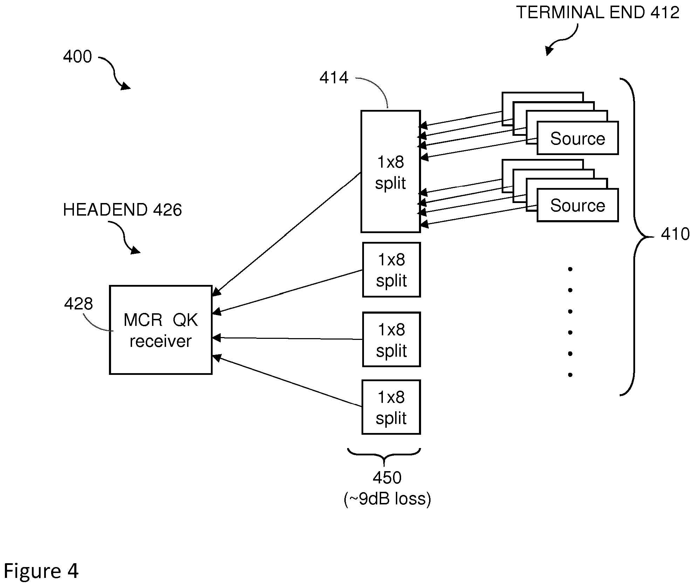

**Figure 4** shows a QKD PON 400 according to a first embodiment of the invention, which provides an MCR-based QKD receiver (QK MCR) 428: that is a mode-coupled receiver (MCR) configured to operate in single-photon detection mode. The MCR is so named because multiple modes are coupled into the same photo-detector, with each mode connecting light from a different fibre into the same photo-detector. The large-area photo detector of the MCR allows direct coupling of multiple fibres to the receiver and provides an almost loss-less optical power combiner at the receiver. To configure the QK MCR to detect single-photons it is operated with an increased bias voltage to bring about single-photon avalanche detection. The detector substrate is biased to react to the arrival of a single-photon with an avalanche current by exploiting impact ionization. Single-photon avalanche detection may be achieved with bias voltages greater than 3x10⁷ volts per metre, although this value may change with developments in MCR technology.

In the arrangement of Figure 4, a plurality of QK sources 410 is connected through a single stage 450 of splitters 414 into the four-input QK MCR 428. The multiple-input QK MCR 428 allows multiple fibres to be coupled to the same photodetector.

When compared with Figure 1, it will be apparent that the arrangement of Figure 4 provides connection for the same number of QK sources (i.e. 32) to a QK receiver but a whole stage of splitters (i.e. second stage 120) has been removed and the associated losses avoided. Where in Figure 1, two stages of splitters 116, 120 are required, only one stage of splitters 450 is used in Figure 4. The reduction in the number of splitter stages that the arrangement of Figure 4 significantly improves the power budget and, as a result, enables communication over greater fibre transmission distances. For example, with a QKD power output of 20dB, a single stage of splitters with 9dB loss leaves an 11dB power budget, which is equivalent to up to 44km of fibre (assuming a fibre loss of 0.25dB/km). Similarly, when compared with Figure 2, it will be apparent that the arrangement of Figure 4 provides connection for the same number of QK sources (i.e. 32) to a QK receiver but a using one x8 splitter 414 in each path instead of the x32 splitter 214 of Figure 2, with a corresponding reduction in splitter losses. The reduction in the number of splits per path that the arrangement of Figure 4 provides, when compared to Figures 1 and 2, significantly improves the power budget (as illustrated above) and, as a result, enables communication over greater fibre transmission distances.

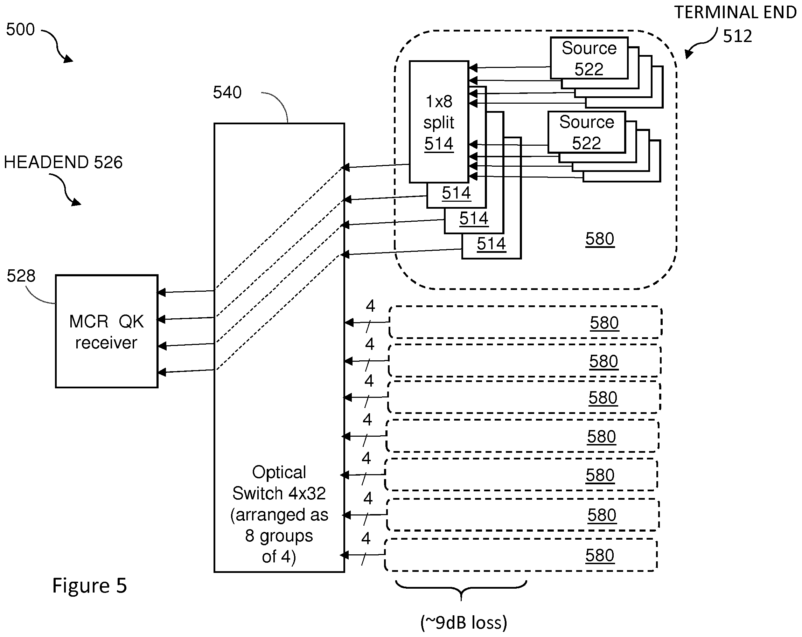

**Figure 5** shows a QKD PON 500 according to a second embodiment of the invention with an optical switch 540 in the paths of the QKD signals. Most elements of Figure 5 have a direct equivalent in Figure 4 and will not be described further here. When compared to Figure 4, Figure 5 shows a similar arrangement but now provides connection for a greatly increased 256 QK sources 522 located at the terminal end 512 of QKD PON 500 to a single MCR-based QK receiver (QK MCR) 528 located at the head end 526 of QKD PON 500 while only requiring a single x8 splitter 514 in each path. Due to the large number of QK sources represented in Figure 5, some details have been replaced with blocks for clarity. That is, each block 580 in Figure 5 comprises four 1x8 splitters 514, with each splitter connected on one side to eight QK sources 522 (only the first eight shown) and connected on the other side to an input of optical switch 540. Optical switches operated in a 1 x N (single-output) configuration are known. As shown in Figure 5, a modified optical switch 540 is provided with the same number of outputs as there are inputs to the QK MCR 528 (although, according to other embodiments, the optical switch may be provided with fewer outputs than there are inputs to the QK MCR 528). In the present example, there are four inputs to the MCR, so that the NxM switch selected in the arrangement of Figure 5, is implemented with 4 outputs and 32 inputs (32x4), with the 32 inputs arranged as 8 groups of 4 and each switch output connected to a different input to the QK MCR 528. Each switch input is connected to an optical splitter 514 that, in this example, combines QKD signals from a group of eight QK sources 522, so that the multiple-input QK MCR 528 is connected to receive from 4x8x8 = 256 QK sources. The splitters 514 are configured as 1x8, with a single-output side connected to a switch input and an eight-output side where each fibre is connected to a different QK source. According to an embodiment, the 32 switch inputs are grouped into 8 groups (only one shown) with 4 inputs per group. The switch directs the four inputs from each group in turn, towards the four switch outputs that are connected to the four inputs of the QK MCR 528 so that the receiver can be connected to each QK source over a cycle through the eight groups. The loss introduced by the switch is typically about 1dB, which is significantly less that the loss introduced by a typical splitter. As a result, the power budget for Figure 5 will be significantly higher than that for Figure 1.

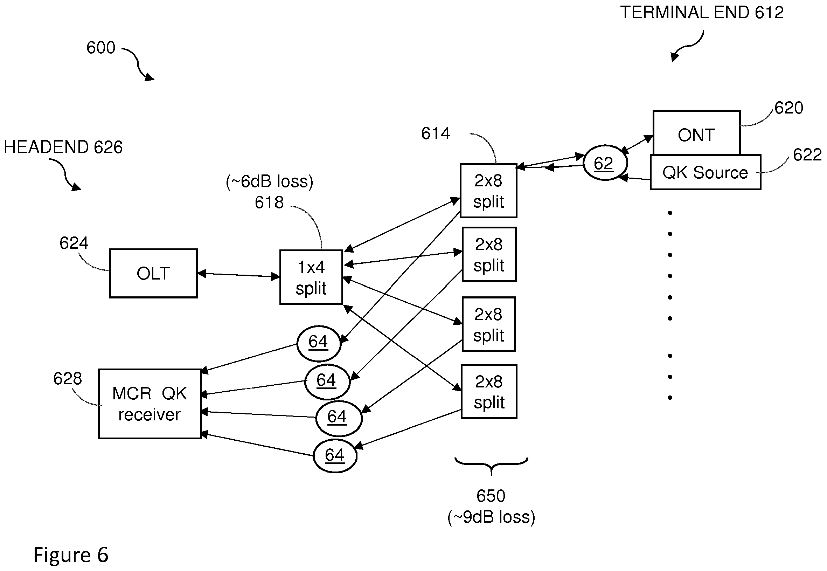

**Figure 6** shows a similar arrangement to Figure 4 but now with data signals (bidirectional arrows) transmitted over common paths through the splitters together with the QKD signals (unidirectional arrows). Most elements of Figure 6 have a direct equivalent in Figures 3 or 4 and will not be described further here. Figure 6 shows QKD PON 600 according to an embodiment, comprising at a terminal end 612, thirty-two data sources (ONT) 620 in addition to thirty-two QK sources 622 (only one of each shown). QKD PON 600 also comprises at a headend 626, a data receiver (OLT) 624 in addition to a QK MCR receiver 628. In Figure 6, the splitters 614 in a first stage 650 are configured in a different way to the splitters in Figures 4 and 5. In Figure 6 the first stage 650 of splitters 614 is configured with a two-output side and an eight-output side (2x8) where the two-output side provides separate optical paths to the OLT 624 and to the QK MCR receiver 628. The combined signal received at one of splitters 614 from the terminal end 612 will be divided between the two outputs so that both data and QKD photons will appear at each output. One output from each first stage splitter 614 is directed to a second stage splitter 618. Splitter 618 is similar to second stage splitters shown in earlier Figures and has four inputs, each connected to a first output of one of the first-stage splitters 614 and a single output connected to OLT 624. QK MCR receiver 628 has four inputs with each input connected to a second output of a different one of the first-stage splitters 614. Figure 6 also shows optical filters 62 and 64. Each optical filter 62 has a first input connected to the output of one of ONTs 620 and a second input connected to an output of one of QK sources 622. Each optical filter 62 has an output connected over an optical path to an input of a first-stage splitter 614. Each Optical filter 62 combines onto the optical path to the first stage of splitters 650 the data signal from an ONT 620 and the QKD signals from a corresponding QK source 622. That is, each filter 62 acts to combine signals in the part of the optical spectrum used to carry the QKD signal with signals in the part of the optical spectrum used to carry data. Each single path from filter 62 to switch 614, e.g. an optical fibre, is represented in Figure 6 by a unidirectional arrow to denote the QKD signal and a bidirectional arrow to denote the data signal

Optical filters 64 are connected between each second output of the first-stage splitters 614 and an input to QK MCR receiver 628. Optical filters 64 filter out the data signal received via the first stage splitter 614 from the ONTs 620. That is, filters 64 act to pass signals in the part of the optical spectrum used to carry the QKD signal but block signals in the part of the optical spectrum used to carry data. The loss introduced by a filter may typically be around 0.5dB, which is significantly less that the loss introduced by a typical splitter

Optical filters 64 prevent data signals from reaching the QK receiver. Filters (not shown) may also be provided on the path to the OLT 624. According to an embodiment, no filters are provided on the path to the OLT 624, as any QKD photons following this path will represent such a weak signal, when compared to the data signals, that the QKD photons will have negligible effect at the OLT. When compared with Figure 3, it will be apparent that a whole stage of splitters (i.e. 352 in Figure 3) and the associated losses (in this case, 6dB) have been avoided in the path from QK source to QK receiver. In other terms, the reduction in the number of splits per path that the arrangement of Figure 6 provides when compared to Figure 3, significantly improves the power budget and, as a result, enables communication of QK signals over greater fibre transmission distances. That is, a path from any one of the QK sources 622 to the QK MCR 628 in Figure 6 has a total of 8 splits compared to the 32 splits (=4x8) in an equivalent path in Figure 3. The arrangement of Figure 6 can be extended by introduction of an optical switch to increase the number of QK sources connecting to a single QK MCR receiver, as described previously with reference to Figure 5.

A conventional QK receiver is unable to distinguish between the arrival of multiple coincident photons. However, the effect of such coincident arrivals is to increase the noise level and common QKD protocols have a small error tolerance that can cope with coincident arrival of multiple photons at a low rate.

To reduce the error rate resulting from the coincident arrival of multiple photons, synchronisation may be provided between the single-photon signal receiver and a plurality of single-photon signal sources so that photon transmission is timed so as to avoid coincident photons arriving at the MCR. A control protocol (for example COW or BB84) receives a request from a single-photon signal source for an opportunity to send. The control protocol replies with a grant to send during a distinct time-slot. The control protocol can, in this way ensure that each single-photon signal source transmits in a distinct time-slot to the other single-photon signal sources, so that single-photon signals only arrive at the head end from one single-photon signal source at a time. The control protocol also knows the source of a single-photon signal arriving at the receiver at a particular time because the control protocol will have allocated the time slot in which the single-photon signal was sent. The control protocol may be executed at the QK receiver or at the OLT of an associated date network. Signalling for the control protocol may be carried in frame headers over an associated data network, such as the PON shown between OLT and ONTs in Figure 6.

The control protocol may be configured so that each QK source is controlled to take it in turns to provide a burst of photons at a rate R that the receiver can cope with (an "acceptable" rate) for long enough to establish a key. Otherwise, the control protocol may be configured so that the N QK sources are controlled to send photons in distinct time slots forming an interleaved pattern at 1/N times the acceptable rate.

It will be understood by those skilled in the art that, although the present invention has been described in relation to the above described example embodiments, the invention is not limited thereto and that there are many possible variations and modifications which fall within the scope of the invention. Although described, above, in relation to an application of single-photon signals to QKD, the invention has application to the communication and detection of any single-photon signal. The invention may use a MCR that has more than or fewer than four inputs. The invention may be used with more than one stage of splitters but will nevertheless reduce the overall number of splits required in each optical path between QK source and receiver in a particular PON. The invention is not limited to any particular number of stages of splitters but may be implemented with more than two stages, according to the circumstances.

## Claims

1. An optical receiver comprising a mode-coupling receiver, said receiver being configured to couple the light of multiple modes, each from a different fibre, into the same photo-detector; in which the mode-coupling receiver comprises a plurality of inputs; **characterized in that** the mode-coupling receiver is configured to detect receipt of a single-photon signal comprising a stream of single photons on each of the plurality of inputs.

2. The optical receiver as claimed in claim 1, in which each input of the mode-coupling receiver is configured to receive a single-photon signal from a different one of a plurality of single-photon signal sources.

3. The optical receiver as claimed in any of claims 1 and 2, in which the single-photon signals comprise photons encoded in different quantum states, in which each photon represents quantum key information.

4. The optical receiver as claimed in any of claims 1 to 3, in which the optical receiver also comprises a programmable device configured to execute a quantum key distribution protocol to derive a cryptographic key from the single-photon signal received at the optical receiver on at least one of the plurality of inputs.

5. A communications system, in which the communications system comprises the optical receiver of any one of claims 1 to 4;
in which the communications system also comprises an access network connecting a plurality of single-photon signal sources with the optical receiver,
in which each of the plurality of inputs of the mode-coupling receiver is connected via the access network for receipt of a single-photon signal from a different one of the plurality of single-photon signal sources.

6. The communications system as claimed in claim 5, in which the access network comprises at least one optical splitter in which at least one of the plurality of inputs of the mode-coupling receiver is connected via an optical splitter for receipt of a single-photon signal from multiple ones of the plurality of single-photon signal sources.

7. The communications system as claimed in any of claims 5 and 6, in which the communications system also comprises an optical switch configured to select, for connection to a switch output, a switch input selected from a plurality of switch inputs; in which each of the plurality of switch inputs is connected to a different one of the plurality of single-photon signal sources; in which the switch output is connected for sending to one of the plurality of inputs of the mode-coupling receiver, a single-photon signal from the one of the plurality of single-photon signal sources connected to the selected switch input.

8. The communications system as claimed in claim 7, in which the optical switch comprises a plurality of outputs, in which the switch is configured to select, for connection to each of the plurality of switch outputs, a different one of the plurality of switch inputs; in which each of the plurality of switch outputs is connected to a different one of the plurality of inputs of the mode-coupling receiver.

9. The communications system as claimed in claim 8, in which the quantity of switch outputs equals the quantity of mode-coupling receiver inputs.

10. The communications system as claimed in any of claims 5 to 9, in which. for an N-input mode-coupling receiver, each single-photon signal source is configured to send photons at a maximum rate of R/N photons per second, where R is the maximum single-photon bit-rate of the mode-coupling receiver.

11. A method of detecting a plurality of single-photon signals, **characterized in that** the method comprises:
operating a single-photon signal receiver comprising a multiple-input, mode-coupling receiver, said receiver being configured to couple the light of multiple modes, each from a different fibre, into the same photo-detector;
in which the multiple-input, mode-coupling receiver detects receipt of a single-photon signal comprising a stream of single photons on each of the plurality of inputs.

12. A method as claimed in claim 11, comprising routing to each input of the mode-coupling receiver, a single-photon signal from a different one of a plurality of single-photon signal sources.

13. A method as claimed in any of claims 11 to 12, comprising executing a quantum key distribution protocol to derive a cryptographic key from the single-photon signal received at the optical receiver on at least one of the plurality of inputs.

14. A method as claimed in any of claims 11 to 13, comprising switching a single-photon signal from a selected one of a plurality of inputs of an optical switch to an output of the optical switch; in which each of the plurality of switch inputs is connected to a different one of a plurality of single-photon signal sources; in which the switch output is connected to one of the plurality of inputs of the mode-coupling receiver.

15. A method as claimed in any of claims 11 to 13, comprising switching to a different output of an optical switch, a different single-photon signal from each of a selected number of inputs of the optical switch; in which the number of switch outputs equals the number of mode-coupling receiver inputs; in which each of the switch outputs is connected to a different one of the plurality of inputs of the mode-coupling receiver.

## Patentansprüche

1. Optischer Empfänger umfassend einen Empfänger mit Modenkopplung, wobei der Empfänger ausgelegt ist zum Koppeln des Lichts von mehreren Modi, jeder von einer anderen Faser, in den gleichen Photodetektor;
wobei der Empfänger mit Modenkopplung mehrere Eingänge umfasst;
**dadurch gekennzeichnet, dass**
der Empfänger mit Modenkopplung ausgelegt ist zum Detektieren des Empfangs eines Einphotonensignals umfassend einen Strom von einzelnen Photonen an jedem der mehreren Eingänge.

2. Optischer Empfänger nach Anspruch 1, bei dem jeder Eingang des Empfängers mit Modenkopplung ausgelegt ist zum Empfangen eines Einphotonensignals von einer anderen von mehreren Einphotonensignalquellen.

3. Optischer Empfänger nach einem der Ansprüche 1 und 2, bei dem die Einphotonensignale in verschiedenen Quantenzuständen codierte Photonen umfassen, in denen jedes Photon Quantenschlüsselinformationen darstellt.

4. Optischer Empfänger nach einem der Ansprüche 1 bis 3, bei dem der optische Empfänger auch eine programmierbare Einrichtung umfasst, die ausgelegt ist zum Ausführen eines Quantenschlüsselverteilungsprotokolls zum Ableiten eines kryptografischen Schlüssels von dem an dem optischen Empfänger an mindestens einem der mehreren Eingänge empfangenen Einphotonensignal.

5. Kommunikationssystem, bei dem das Kommunikationssystem den optischen Empfänger nach einem der Ansprüche 1 bis 4 umfasst;
bei dem das Kommunikationssystem auch ein Zugangsnetzwerk umfasst, das mehrere Einphotonensignalquellen mit dem optischen Empfänger verbindet,
bei dem jeder der mehreren Eingänge des Empfängers mit Modenkopplung über das Zugangsnetzwerk für den Empfang eines Einphotonensignals von einer anderen der mehreren Einphotonensignalquellen angeschlossen ist.

6. Kommunikationssystem nach Anspruch 5, bei dem das Zugangsnetzwerk mindestens einen optischen Splitter umfasst, bei dem mindestens einer der mehreren Eingänge des Empfängers mit Modenkopplung über einen optischen Splitter für den Empfang eines Einphotonensignals von mehreren einzelnen der mehreren Einphotonensignalquellen angeschlossen ist.

7. Kommunikationssystem nach einem der Ansprüche 5 und 6, bei dem das Kommunikationssystem auch einen optischen Schalter umfasst, der ausgelegt ist zum Wählen, zur Verbindung mit einem Schalterausgang, eines Schaltereingangs ausgewählt unter mehreren Schaltereingängen; bei dem jeder der mehreren Schaltereingänge an einer anderen der mehreren Einphotonensignalquellen angeschlossen ist; bei dem der Schalterausgang angeschlossen ist zum Senden an einen der mehreren Eingänge des Empfängers mit Modenkopplung eines Einphotonensignals von der mit dem gewählten Schaltereingang verbundenen einen der mehreren Einphotonensignalquellen.

8. Kommunikationssystem nach Anspruch 7, bei dem der optische Schalter mehrere Ausgänge umfasst, bei dem der Schalter ausgelegt ist zum Wählen, zur Verbindung mit jedem der mehreren Schalterausgänge, eines anderen der mehreren Schaltereingänge; bei dem jeder der mehreren Schalterausgänge mit einem anderen der mehreren Eingänge des Empfängers mit Modenkopplung verbunden ist.

9. Kommunikationssystem nach Anspruch 8, bei dem die Menge an Schalterausgängen gleich der Menge an Eingängen des Empfängers mit Modenkopplung ist.

10. Kommunikationssystem nach einem der Ansprüche 5 bis 9, bei dem für einen Empfänger mit Modenkopplung und N Eingängen jede Einphotonensignalquelle ausgelegt ist zum Senden von Photonen mit einer maximalen Rate von R/N Photonen pro Sekunde, wobei R die maximale Einphotonenbitrate des Empfängers mit Modenkopplung ist.

11. Verfahren zum Detektieren von mehreren Einphotonensignalen, **dadurch gekennzeichnet, dass** das Verfahren umfasst:
Betreiben eines Einphotonensignalempfängers umfassend einen Empfänger mit Modenkopplung und mehreren Eingängen, wobei der Empfänger ausgelegt ist zum Koppeln des Lichts von mehreren Modi, jedes von einer anderen Faser, in den gleichen Fotodetektor;
bei dem der Empfänger mit Modenkopplung und mehreren Eingängen den Empfang eines Einphotonensignals umfassend einen Strom von einzelnen Photonen an jedem der mehreren Eingänge umfasst.

12. Verfahren nach Anspruch 11, umfassend das Weiterleiten zu jedem Eingang des Empfängers mit Modenkopplung eines Einphotonensignals von einer anderen von mehreren Einphotonensignalquellen.

13. Verfahren nach einem der Ansprüche 11 bis 12, umfassend das Ausführen eines Quantenschlüsselverteilungsprotokolls zum Ableiten eines kryptografischen Schlüssels von dem an dem optischen Empfänger an mindestens einem der mehreren Eingänge empfangenen Einphotonensignal.

14. Verfahren nach einem der Ansprüche 11 bis 13, umfassend das Schalten eines Einphotonensignals von einem gewählten von mehreren Eingängen eines optischen Schalters zu einem Ausgang des optischen Schalters; bei dem jeder der mehreren Schaltereingänge mit einer anderen von mehreren Einphotonensignalquellen verbunden ist; bei dem der Schalterausgang mit einem der mehreren Eingänge des Empfängers mit Modenkopplung verbunden ist.

15. Verfahren nach einem der Ansprüche 11 bis 13, umfassend das Schalten auf einen anderen Ausgang eines optischen Schalters, eines anderen Einphotonensignals von jedem einer gewählten Anzahl von Eingängen des optischen Schalters; bei dem die Anzahl von Schalterausgängen gleich der Anzahl von Eingängen des Empfängers mit Modenkopplung ist; bei dem jeder der Schalterausgänge mit einem anderen der mehreren Eingänge des Empfängers mit Modenkopplung verbunden ist.

## Revendications

1. Récepteur optique comprenant un récepteur à couplage de mode, ledit récepteur étant configuré pour coupler la lumière de modes multiples, provenant chacun d'une fibre différente, dans le même photodétecteur ;
dans lequel le récepteur de couplage de mode comprend une pluralité d'entrées ;
**caractérisé en ce que** le récepteur de couplage de mode est configuré pour détecter la réception d'un signal de photons uniques comprenant un flux de photons uniques sur chacune des pluralités d'entrées.

2. Récepteur optique selon la revendication 1, dans lequel chaque entrée du récepteur à couplage de mode est configurée pour recevoir un signal de photons uniques provenant d'une source différente d'une pluralité de sources de signaux de photons uniques.

3. Récepteur optique selon l'une quelconque des revendications 1 et 2, dans lequel les signaux de photons uniques comprennent des photons codés dans différents états quantiques, chaque photon représentant des informations de clés quantiques.

4. Récepteur optique selon l'une quelconque des revendications 1 à 3, dans lequel le récepteur optique comprend également un dispositif programmable configuré pour exécuter un protocole de distribution de clés quantiques permettant de dériver une clé cryptographique à partir du signal de photons uniques reçu au niveau du récepteur optique sur au moins une entrée de la pluralité d'entrées.

5. Système de communication, le système de communication comprenant le récepteur optique selon l'une quelconque des revendications 1 à 4 ;
le système de communication comprenant également un réseau d'accès reliant une pluralité de sources de signaux de photons uniques au récepteur optique,
dans lequel chacune des pluralités d'entrées du récepteur à couplage de mode est connectée par l'intermédiaire du réseau d'accès pour la réception d'un signal de photons uniques à partir d'une source différente de la pluralité de sources de signaux de photons uniques.

6. Système de communication selon la revendication 5, dans lequel le réseau d'accès comprend au moins un diviseur optique, au moins une entrée de la pluralité d'entrées du récepteur à couplage de mode étant connectée par l'intermédiaire d'un diviseur optique pour la réception d'un signal de photons uniques à partir de multiples sources de la pluralité de sources de signaux de photons uniques.

7. Système de communication selon l'une quelconque des revendications 5 et 6, le système de communication comprenant également un commutateur optique configuré pour sélectionner, en vue de sa connexion à un commutateur de sortie, une entrée de commutateur sélectionnée parmi une pluralité d'entrées de commutateur ; dans lequel chaque entrée de la pluralité d'entrées de commutation est connectée à une source différente de la pluralité de sources de signaux de photons uniques ; dans lequel la sortie du commutateur est connectée pour envoyer à une entrée de la pluralité d'entrées du récepteur à couplage de mode, un signal de photons uniques à partir de la source de la pluralité de sources de signaux de photons uniques connectée à l'entrée de commutateur sélectionnée.

8. Système de communication selon la revendication 7, dans lequel le commutateur optique comprend une pluralité de sorties, le commutateur étant configuré pour sélectionner, en vue de sa connexion à chaque sortie de la pluralité de sorties de commutation, une entrée différente de la pluralité d'entrées de commutation ; dans lequel chaque sortie de la pluralité de sorties de commutation est connectée à une entrée différente de la pluralité d'entrées du récepteur à couplage de mode.

9. Système de communication selon la revendication 8, dans lequel la quantité de sorties de commutation est égale à la quantité d'entrées de récepteur à couplage de mode.

10. Système de communication selon l'une quelconque des revendications 5 à 9, dans lequel, pour un récepteur à couplage de mode à N entrées, chaque source de signal de photons uniques est configurée pour envoyer des photons à un débit maximal de R/N photons par seconde, R étant le débit binaire maximal d'un photon unique du récepteur à couplage de mode.

11. Procédé de détection d'une pluralité de signaux de photons uniques, **caractérisé en ce que** le procédé comprend :
l'exploitation d'un récepteur de signaux de photons uniques comprenant un récepteur à couplage de mode à entrées multiples, ledit récepteur étant configuré pour coupler la lumière de modes multiples, provenant chacun d'une fibre différente, dans le même photodétecteur ;
dans lequel le récepteur à couplage de mode à entrées multiples détecte la réception d'un signal de photons uniques comprenant un flux de photons uniques sur chaque entrée de la pluralité d'entrées.

12. Procédé selon la revendication 11, comprenant le routage, vers chaque entrée du récepteur à couplage de mode, d'un signal de photons uniques à partir d'une source différente d'une pluralité de sources de signaux de photons uniques.

13. Procédé selon l'une quelconque des revendications 11 à 12, comprenant l'exécution d'un protocole de distribution de clés quantiques pour dériver une clé cryptographique à partir du signal de photons uniques reçu au niveau du récepteur optique sur au moins une entrée de la pluralité d'entrées.

14. Procédé selon l'une quelconque des revendications 11 à 13, comprenant la commutation d'un signal de photons uniques d'une entrée sélectionnée d'une pluralité d'entrées d'un commutateur optique sur une sortie du commutateur optique ; dans lequel chaque entrée de la pluralité d'entrées de commutation est connectée à une source différente de la pluralité de sources de signaux de photons uniques ; dans lequel la sortie de commutateur est connectée à une entrée de la pluralité d'entrées du récepteur à couplage de mode.

15. Procédé selon l'une quelconque des revendications 11 à 13, comprenant la commutation sur une sortie différente d'un commutateur optique d'un signal de photons uniques différent depuis chaque entrée d'un nombre sélectionné d'entrées du commutateur optique ; dans lequel le nombre de sorties de commutateur est égal au nombre d'entrées de récepteur à couplage de mode ; dans lequel chacune des sorties de commutateur est connectée à une entrée différente de la pluralité d'entrées du récepteur à couplage de mode.
